# EUROPEAN PATENT SPECIFICATION

(11) **EP 3 943 922 B1**
(45) Date of publication and mention of the grant of the patent: **10.09.2025**
(21) Application number: 19920191.4
(22) Date of filing: 19.03.2019
(51) Int. Cl.: G01N 21/90

(54) **INSPECTION DEVICE, INSPECTION METHOD, AND NON-TRANSITORY COMPUTER-READABLE MEDIUM**
INSPEKTIONSVORRICHTUNG, INSPEKTIONSVERFAHREN UND NICHTFLÜCHTIGES COMPUTERLESBARES MEDIUM
DISPOSITIF D'INSPECTION, PROCÉDÉ D'INSPECTION ET SUPPORT NON TRANSITOIRE LISIBLE PAR ORDINATEUR

(43) Date of publication of application: 26.01.2022
(73) Proprietor: NEC CORPORATION, Minato-ku, Tokyo 108-8001 (JP)
(72) Inventor: YACHIDA, Shoji, Tokyo 108-8001 (JP)
(74) Representative: Betten & Resch
(86) International application number: PCT/JP2019/011365
(87) International publication number: WO 2020/188730

(56) References cited:
- CN-A- 108 896 574
- JP-A- 2004 325 071
- JP-A- 2011 247 835
- JP-A- 2013 096 921
- JP-A- 2015 010 967
- JP-A- 2015 010 967
- JP-A- 2017 518 490
- JP-A- H09 236 553
- JP-A- H09 325 122
- US-A1- 2018 150 965
- NISHIOKA, MASAO: "Ampoule Vial Automatic Inspection Machine Development Case [Actual Situation of Inspection Machine]", PHARM TECH JAPAN, vol. 17, no. 11, 1 January 2001 (2001-01-01), JP, pages 45 (1721) - 50 (1726), XP009530004, ISSN: 0910-4739

## Description

### Technical Field

The present disclosure relates to a product-inspection apparatus, a product-inspection method, and a computer program.

### Background Art

An ordinary product-inspection apparatus is configured to determine whether or not an object to be inspected, which is an object in which an object to be contained is contained in a container, is a quality product by determining whether or not a foreign substance is contained in the object to be inspected. For example, a product-inspection apparatus disclosed in Patent Literature 1 is configured so that a foreign substance contained in an object to be inspected, which is an object in which a liquid is contained in a vial, can be detected without being affected by unevenness of the vial such as an outline part thereof based on image information that is acquired by placing the object to be inspected on a rotary inspection table, revolving the object to be inspected thereon, applying light, by a light source, to the object to be inspected from an oblique direction on one side of the object to be inspected, and receiving light that has passed through the object to be inspected from an oblique direction on the other side of the object to be inspected.

### Citation List

### Patent Literature

Patent Literature 1: Japanese Unexamined Patent Application Publication No. 2005-17004
US 2018/150965 A, JP H09 325122 A and JP 2015 010967 A represent related art.

### Summary of Invention

### Technical Problem

In the product-inspection apparatus disclosed in Patent Literature 1, when a foreign substance floating on a water surface of the liquid is detected, it is necessary to position the light source and the light receiving unit above the vial, whereas when a precipitated foreign substance is detected, it is necessary to position the light source and the light receiving unit below the vial. That is, in the product-inspection apparatus disclosed in Patent Literature 1, it is necessary to change the arrangement of the light source and the light receiving unit according to the specific gravity of a foreign substance relative to that of the liquid. Therefore, when an object to be inspected is inspected by using the product-inspection apparatus disclosed in Patent Literature 1, the product-inspection of the object to be inspected is complicated.

### Solution to Problem

The above problem is solved with the features of the independent claims.

### Advantageous Effects of Invention

With the claimed configuration, it is possible to provide a product-inspection apparatus, a product-inspection method, and a non-transitory computer program capable of contributing to the simplification of the product-inspection of an object to be inspected.

### Brief Description of Drawings

Fig. 1 is a block diagram showing a minimum configuration of a product-inspection apparatus according to a first example embodiment;
Fig. 2 is a flowchart showing a product-inspection method according to the first example embodiment;
Fig. 3 shows a specific configuration of a product-inspection apparatus according to the first example embodiment;
Fig. 4 is a front view showing a grasping part and a part therearound of the product-inspection apparatus according to the first example embodiment;
Fig. 5 is a plan view showing the grasping part and the part therearound of the product-inspection apparatus according to the first example embodiment;
Fig. 6 is a flowchart showing a specific flow of a product-inspection method according to the first example embodiment;
Fig. 7 is a diagram for explaining movements of a bubble and a foreign substance having a specific gravity smaller than that of a fluid when an object to be inspected is rotated;
Fig. 8 is a diagram for explaining a movement of a foreign substance having a specific gravity larger than that of the fluid when the object to be inspected is rotated; and
Fig. 9 shows an example of a hardware configuration included in a processing apparatus.

### Description of Embodiments

A best mode for carrying out the present disclosure will be described hereinafter with reference to the accompanying drawings. However, the present disclosure is not limited to the below-shown example embodiments. Further, to clarify the explanation, the following description and drawings are simplified as appropriate.

### <First Example Embodiment>

In a product-inspection apparatus and a product-inspection method according to this example embodiment, it is determined whether or not an object to be inspected, which is an object in which a gas and a fluid are hermetically contained in a container, is a quality product. The fluid has such a viscosity that it can flow inside the container, and is, for example, in a liquid state, a gel state, or a sol state. Further, macromolecular medicines such as oral medicines or injection medicines are suitable as the fluid. Such fluids are semi-transparent or transparent, and therefore have a light transmitting property.

The container is an optically-transparent vial, an optically transparent ampule, or an optically transparent test tube. In this case, although its detailed function will be described later, the container preferably has an elongated shape. When a gas and a fluid are hermetically contained in such a container and the direction of gravity is defined as a downward direction, the fluid is disposed in the lower part of the container and the gas is disposed above the fluid.

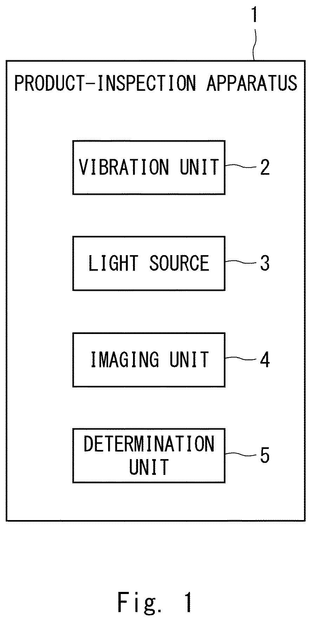

Firstly, a minimum configuration of a product-inspection apparatus according to this example embodiment will be described. Fig. 1 is a block diagram showing a minimum configuration of a product-inspection apparatus according to this example embodiment. As shown in Fig. 1, the product-inspection apparatus 1 includes a rotation unit 2, light sources 3, an imaging unit 4, and a determination unit 5. The rotation unit 2 rotates an object to be inspected up and down.

The light sources 3 are disposed so as to surround the object to be inspected as viewed in the vertical direction, and successively apply light, which passes through the object to be inspected, to the object to be inspected from different directions. The imaging unit 4 successively takes images of the object to be inspected according to light-application timings at which the light sources 3 successively apply light to the object to be inspected. The determination unit 5 determines whether or not the object to be inspected is a quality product based on the image information taken by the imaging unit 4.

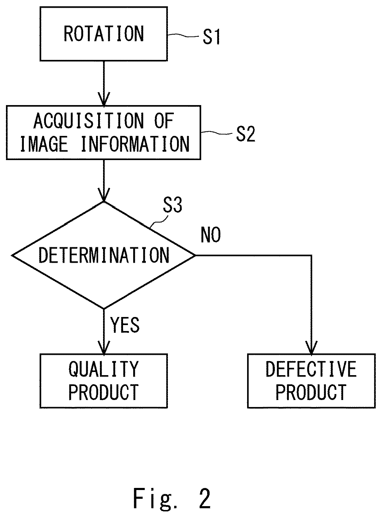

Next, a product-inspection method using a product-inspection apparatus according to this example embodiment will be described. Fig. 2 is a flowchart showing a product-inspection method according to this example embodiment. Firstly, the rotation of an object to be inspected by the rotation unit 2 is started (S1). Then, image information of the object to be inspected, of which the rotation has started, is acquired (S2).

Specifically, while successively applying light to the rotating object to be inspected from different directions by the light sources 3, the imaging unit 4 successively takes images of the object to be inspected according to light-application timings at which the light sources 3 successively applies the light to the object to be inspected. In this way, it is possible to acquire image information every time the object to be inspected is irradiated with light from a different direction.

Next, the determination unit 5 determines whether or not the object to be inspected is a quality product based on the acquired image information (S3). Note that by rotating the object to be inspected, a gas becomes a bubble and moves in a fixed direction inside the fluid according to the rotation direction of the object to be inspected. However, if a foreign substance is contained in the object to be inspected, the foreign substance behaves differently from the bubble. Note that the foreign substance is a substance different from the fluid. Examples of the foreign substance include a piece of a fiber such as a cloth, a piece of hair falling from a human body, a piece of metal such as a piece of a component in a production line for the object to be inspected or the like, and a piece of resin and a piece of glass such as a piece of a container.

Therefore, when a substance that behaves differently from the movement of the bubble in the fluid is detected based on the acquired image information, the determination unit 5 determines that a foreign substance is contained in the object to be inspected, and determines that the object to be inspected is a defective product (No in S3). On the other hand, when no substance that behaves differently from the movement of the bubble in the fluid is detected based on the acquired image information, the determination unit 5 determines that no foreign substance is contained in the object to be inspected, and determines that the object to be inspected is a quality product (Yes in S3).

As described above, in the product-inspection apparatus 1 and the product-inspection method according to this example embodiment, a foreign substance is detected by rotating the object to be inspected up and down and thereby making the foreign substance behave differently from the movement of the bubble. Therefore, in the product-inspection apparatus 1 and the product-inspection method according to this example embodiment, there is no need to change the arrangement of the light source and the imaging unit according to the specific gravity of a foreign substance relative to that of the fluid. Therefore, they can contribute to the simplification of the product-inspection of an object to be inspected.

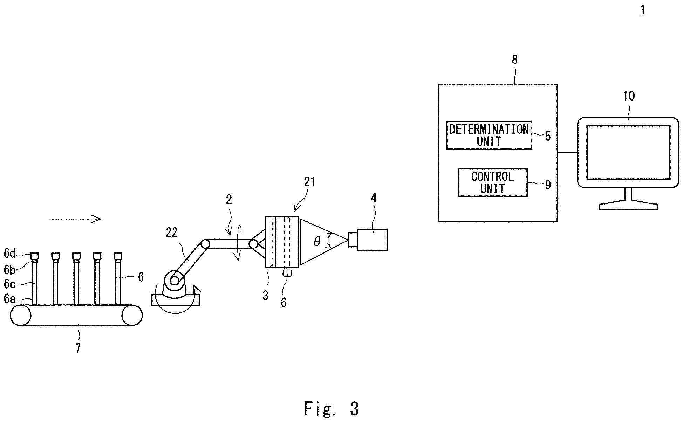

Next, a specific configuration of the product-inspection apparatus 1 according to this example embodiment will be described. Fig. 3 shows a specific configuration of a product-inspection apparatus according to this example embodiment. Note that, as shown in Fig. 3, for example, the object to be inspected 6 is sealed by a plug 6d in a state in which a gas 6b and a fluid 6c are contained in an elongated cylindrical container 6a having a bottom. However, the object to be inspected 6 may have an arbitrary configuration as long as the gas 6b and the fluid 6c are hermetically contained in the container 6a, and the container 6a is optically transparent.

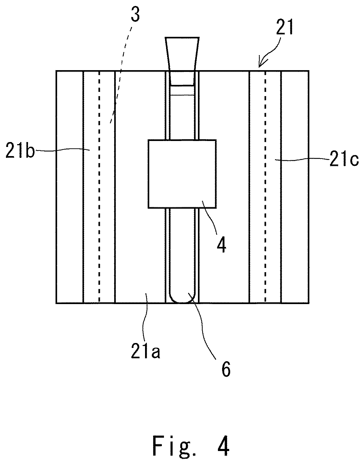

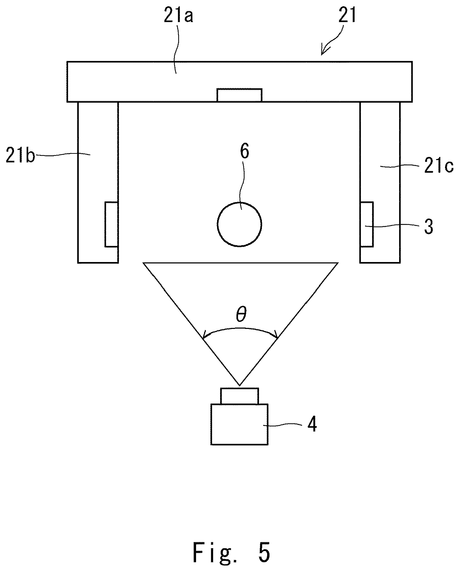

The rotation unit 2 includes a grasping part 21 and a robot arm 22, and grasps and rotates an object to be inspected 6 that has been conveyed by a conveyance table 7. Here, Fig. 4 is a front view showing a grasping part and a part therearound of the product-inspection apparatus according to this example embodiment. Fig. 5 is a plan view showing the grasping part and the part therearound of the product-inspection apparatus according to this example embodiment. Note that Figs. 4 and 5 show a state before the grasping part 21 grasps the object to be inspected.

The grasping part 21 is a robot hand configured to be able to grasp an object to be inspected 6. As shown in Figs. 4 and 5, for example, the grasping part 21 includes a base part 21a, a first grasping piece 21b, and a second grasping piece 21c. Further, the grasping part 21 can operate so that a distance between the first and second grasping pieces 21b and 21c, which project in the same direction from the base part 21a, is changed. The robot arm 22 is a multi-axis robot arm, and the base part 21a of the grasping part 21 is connected to the tip of the robot arm 22.

Each of the light sources 3 emits light in a wavelength range in which the quality of the fluid 6c does not change. That is, each of the light sources 3 preferably emits light in a wavelength range other than the far-infrared rays and the ultraviolet rays by which the quality of macromolecular medicines changes. For example, in the case where the container 6a is a glass vial, each of the light sources 3 preferably emits light in a wavelength range of near-infrared rays in which the transmittance of the container 6a is high. Regarding the light sources 3, a plurality of light sources are arranged around the grasping part 21 of the rotation unit 2 as viewed in the vertical direction. Further, the light sources 3 can apply light to substantially the entire area of the object to be inspected 6 in the vertical direction thereof in a state in which the grasping part 21 grasps the object to be inspected 6 in the left/right direction.

For example, as shown in Figs. 4 and 5, the light sources 3 are disposed on the base part 21a, the first grasping piece 21b, and the second grasping piece 21c of the rotation unit 2. That is, the light sources 3 are arranged so as to be able to apply light to the object to be inspected 6 grasped by the grasping part 21 of the rotation unit 2 from three directions. It should be noted although the light sources 3 according to this example embodiment are disposed in the rotation unit 2, the light sources 3 may be arranged in an arbitrary manner as long as they can apply light to the object to be inspected 6 from a plurality of directions.

The imaging unit 4 includes an image sensor such as a CMOS (Complementary Metal Oxide Semiconductor) or a CCD (Charge Coupled Device), and outputs acquired image information to the determination unit 5. For example, as shown in Figs. 4 and 5, the imaging unit 4 can be disposed so as to be opposed to the light source 3 disposed in the base part 21a of the rotation unit 2.

The determination unit 5 determines whether or not the object to be inspected 6 is a quality product based on the image information acquired as described above, and is disposed, for example, in a processing apparatus 8. The processing apparatus 8 includes a control unit 9 in addition to the determination unit 5. The control unit 9 controls the rotation unit 2, the light-application timing of the light sources 3, the shooting timing of the imaging unit 4, and the conveyance timing of the conveyance table 7 (which will be described later in detail).

Note that when a display unit 10 is electrically connected to the processing apparatus 8, the control unit 9 may control the display unit 10 so that the acquired image information is displayed in the display unit 10. The display unit 10 includes a display device such as an ordinary liquid-crystal display panel or an organic EL (Electro Luminescence) panel.

Note that when the display unit 10 is equipped with a touch panel disposed on the display device, an inspector can make various settings (e.g., the setting of the rotation speed of the object to be inspected 6, the setting of the frame rate of the imaging unit 4, and the like) through the display unit 10. However, the product-inspection apparatus 1 may need to be equipped with an input unit by which an inspector makes various settings.

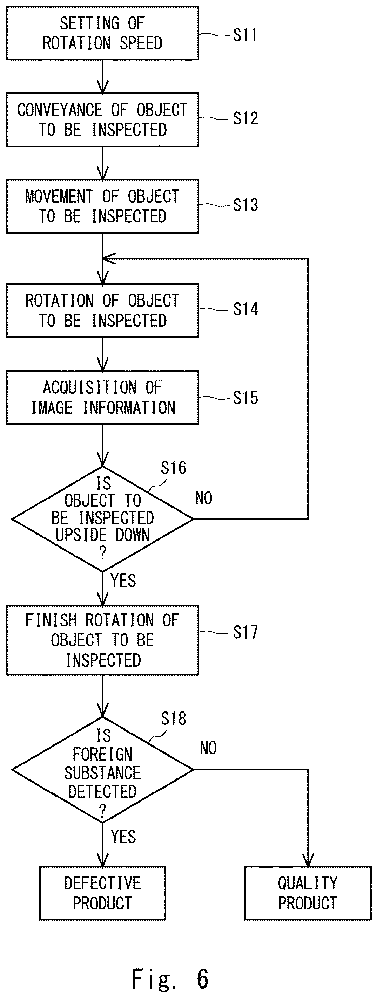

Next, a specific flow of a product-inspection method according to this example embodiment will be described. Fig. 6 is a flowchart showing a specific flow of a product-inspection method according to this example embodiment. Firstly, an inspector sets the rotation speed of an object to be inspected 6 through the display unit 10 (S11).

Specifically, the rotation speed of the object to be inspected 6 is set in advance according to the type of the object to be inspected 6 so that when the object to be inspected 6 is rotated, the gas 6b becomes a bubble (hereinafter the symbol "6b", which represents the gas, may also be added to the bubble) and moves inside the fluid 6c roughly at a constant speed irrespective of the viscosity of the fluid 6c of the object to be inspected 6. Further, for example, the inspector can set the rotation speed of the object to be inspected 6 by selecting the type of the object to be inspected 6 displayed in the display unit 10 through the display unit 10.

Next, when the rotation speed of the object to be inspected 6 is set, the control unit 9 conveys, by controlling the conveyance table 7, the object to be inspected 6 to a place where the grasping part 21 can grasp the object to be inspected 6 (S12). Note that the conveyance table 7 conveys the object to be inspected 6 to the side thereof on which the rotation unit 2 is located in a state where the object to be inspected 6 is disposed on the conveyance table 7 in such a manner that, for example, the longitudinal direction of the object to be inspected 6 coincides with the vertical direction and the plug 6d is positioned on the upper side thereof. However, the position and the like of the object to be inspected 6 during the conveyance by the conveyance table 7 are not limited to any particular position and the like. For example, the object to be inspected 6 may be conveyed in a state in which the object to be inspected 6 lies down on the conveyance table 7.

Then, the control unit 9 controls the robot arm 22 so as to grasp the object to be inspected 6 between the first and second grasping pieces 21b and 21c of the grasping part 21, and to move the object to be inspected 6 so that the object to be inspected 6 is disposed between the imaging unit 4 and the base part 21a of the grasping part 21 (S13). In this process, although its detailed function will be described later, the object to be inspected 6 is preferably grasped by the grasping part 21 so that the rotation axis of the robot arm 22 around which the grasping part 21 thereof is rotated is positioned roughly at the center of the object to be inspected 6 in the longitudinal direction thereof and the longitudinal direction of the object to be inspected 6 coincides with the vertical direction.

Next, the control unit 9 starts the rotation of the object to be inspected 6 by controlling the robot arm 22 so that the object to be inspected 6 is turned upside down (S14). Note that the object to be inspected 6 is preferably rotated in a state in which, when the side of the object to be inspected 6 on which the imaging unit 4 is disposed is defined as a front side and the side of the object to be inspected 6 on which the base part 21a of the grasping part 21 is disposed is defined as a rear side, the rotation axis of the robot arm 22 around which the grasping part 21 thereof is rotated extends in the front/rear direction.

Next, the control unit 9 successively controls the light sources 3 and thereby applies light to the rotating object to be inspected 6 from different directions, and at the same time, controls the imaging unit 4 so as to take an image of the object to be inspected 6 every time the object to be inspected 6 is irradiated with light from a different direction. By doing so, the control unit 9 makes the imaging unit 4 acquire image information (S15). Then, the control unit 9 controls the imaging unit 4 so as to output the acquired image information to the determination unit 5.

For example, the control unit 9 turns on and turns off the light sources 3 in the order of the light source 3 disposed in the first grasping piece 21b of the grasping section 21, the light source 3 disposed in the base part 21a of the grasping part 21, and the light source 3 disposed in the second grasping piece 21c of the grasping part 21.

That is, when the control unit 9 turns on the light source 3 disposed in the first grasping piece 21b, it turns off the other light sources 3, and when the control unit 9 turns on the light source 3 disposed in the base part 21a, it turns off the other light sources 3. Further, when the control unit 9 tunes on the light sources 3 disposed in the second grasping piece 21c, it turns off the other light sources 3. However, the order in which the light sources 3 are turned on can be changed as desired.

Then, the control unit 9 controls the imaging unit 4 so as to take an image of the object to be inspected 6 every time one of the light sources 3 is turned on, and thereby makes the imaging unit 4 acquire image information. Note that the control unit 9 controls the rotation unit 2 so that the object to be inspected 6 rotates within the angle of view θ of the imaging unit 4. In this regard, by rotating the object to be inspected 6 around the rotation axis that extends in the front/rear direction and passes through roughly the center of the object to be inspected 6 in the longitudinal direction thereof as described above, it is possible to reduce the amount of the movement of the object to be inspected 6 in the left/right direction and the vertical direction and thereby to satisfactorily confine the object to be inspected 6 in the angle of view θ of the imaging unit 4.

Note that the control unit 9 preferably controls the light-application timings of the light sources 3 so that they are synchronized with the shooting timings of the imaging unit 4. In this way, it is possible to apply light from the light sources 3 to the object to be inspected 6 at the shooting timings at which the object to be inspected 6 is photographed by the imaging unit 4. Therefore, it is possible satisfactorily acquire image information in a state where the object to be inspected 6 is illuminated by light. Note that the frame rate of the imaging unit 4 is set so that it is possible to keep track of the bubble 6b and a foreign substance in a satisfactory manner (which will be described later in detail).

Next, the control unit 9 determines whether or not the object to be inspected 6 is positioned upside down (i.e., the object to be inspected 6 has been rotated by about 180°) (S16). Note that the control unit 9 preferably determines whether or not the object to be inspected 6 is positioned upside down based on detection information such as information obtained by an encoder provided in the rotation-axis part of the robot arm 22 for rotating the grasping part 21 thereof.

When the object to be inspected 6 is not positioned upside down (No in S16), the control unit 9 repeats the steps S14 to S16. On the other hand, when the object to be inspected 6 is positioned upside down (Yes in S16), the control unit 9 finishes the rotation of the object to be inspected 6 by controlling the robot arm 22 (S17).

When the rotation of the object to be inspected 6 is finished, the determination unit 5 determines whether or not a substance (a foreign substance) which behaves differently from the movement of the bubble 6b in the fluid 6c has been detected based on the image information (S18). Specifically, the determination unit 5 arranges (i.e., sorts) pieces of image information acquired for respective light-application directions of the light sources 3 in a chronological order, and thereby generates moving-image information. For example, the determination unit 5 arranges pieces of image information, which are acquired by acquiring a piece of image information every time the light source 3 disposed in the first grasping piece 21b is turned on, in a chronological order, and thereby generates moving-image information.

Further, the determination unit 5 arranges pieces of image information, which are acquired by acquiring a piece of image information every time the light source 3 disposed in the base part 21a is turned on, in a chronological order, and thereby generates moving-image information. Further, the determination unit 5 arranges pieces of image information, which are acquired by acquiring a piece of image information every time the light source 3 disposed in the second grasping piece 21c is turned on, in a chronological order, and thereby generates moving-image information. In these processes, the determination unit 5 corrects the inclination of each of the pieces of image information based on detection information such as information obtained by an encoder provided in the rotation-axis part of the robot arm 22 for rotating the grasping part 21 thereof so that the pieces of image information have inclinations equal to each other.

Then, the determination unit 5 compares the pixel values of pixels adjacent to each other, defines, for example, pixels having pixel values of which differences from those of pixels adjacent to them are equal to or larger than a predetermined threshold as a boundary with the fluid 6c, labels a group of pixels surrounded by these pixels, keeps track of the group of labeled pixels based on each of pieces of moving-image information, and recognizes the moving direction of the group of pixels. Note that the predetermined threshold has an absolute value. Note that the determination unit 5 may label pixels having pixel values having differences equal to or larger than a predetermined threshold, and keep track of the labeled pixels.

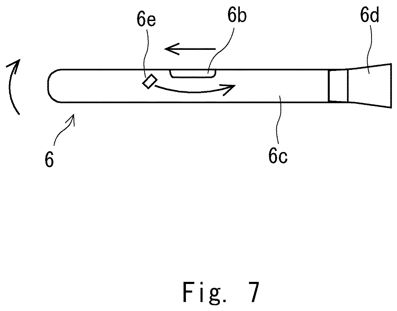

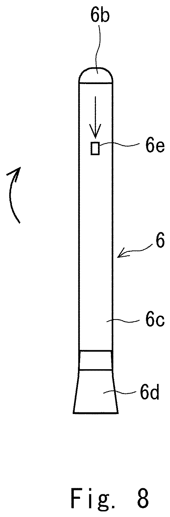

Note that as described above, the bubble 6b moves in a certain direction according to the rotational direction of the object to be inspected 6. Here, Fig. 7 is a diagram for explaining movements of a bubble and a foreign substance having a specific gravity smaller than that of the fluid when the object to be inspected is rotated. Fig. 8 is a diagram for explaining a movement of a foreign substance having a specific gravity larger than that of the fluid when the object to be inspected is rotated.

For example, as shown in Fig. 7, when the object to be inspected 6 is rotated clockwise as viewed from the front side thereof, the bubble 6b moves from the right side to the left side in the fluid 6c and is eventually disposed in the upper part of the fluid 6c. On the other hand, when the object to be inspected 6 is rotated counterclockwise as viewed from the front side, the bubble 6b moves from the left side to the right side in the fluid 6c and is eventually disposed in the upper part of the fluid 6c.

When the bubble 6b moves as described above, the foreign substance 6e having the specific gravity smaller than that of the fluid 6c is sucked to the part of the fluid 6c that is narrowed due to the bubble 6b as if being pushed away by the bubble 6b as shown in Fig. 7, and moves in the direction opposite to the moving direction of the bubble 6b in the narrowed part. After that, the foreign substance 6e moves upward in the fluid 6c. Therefore, the foreign substance 6e having the specific gravity smaller than that of the fluid 6c behaves differently from the bubble 6b.

On the other hand, as shown in Fig. 8, the foreign substance 6e having the specific gravity larger than that of the fluid moves in the direction opposite to the movement of the bubble 6b in the fluid 6c. Therefore, the foreign substance 6e having the large specific gravity also behaves differently from the bubble 6b.

Therefore, by the tracking, the determination unit 5 recognizes a group of pixels that moves in the predetermined moving direction as a bubble 6b, and recognizes a group of pixels behaving differently from the movement of the bubble 6b as a foreign substance 6e.

Note that the imaging unit 4 preferably photographs the object to be inspected 6 at such a frame rate that the tracking of the group of pixels can be performed without becoming un-trackable due to the sudden movement of the group of pixels in the moving-image information. For example, the frame rate of the imaging unit 4 is set as appropriate according to the viscosity of the fluid 6c so that the moving distance of a group of pixels in each frame is equal to or shorter than one pixel. For example, in the case of a viscosity of 1 [mPa·s], i.e., a viscosity equivalent to that of pure water at 20°C, the frame rate of the imaging unit 4 needs to be at least 1,000 fps. Further, the frame rate of the imaging unit 4 may be reduced as the viscosity increases.

When a foreign substance 6e which behaves differently from the movement of the bubble 6b is detected (Yes in S18), the determination unit 5 determines that the object to be inspected 6 is a defective product and outputs the result of the determination to the control unit 9. The control unit 9 moves out the object to be inspected 6 into a defective-product lane by controlling the rotation unit 2.

On the other hand, when no foreign substance 6e which behaves differently from the movement of the bubble 6b is detected (No in S18), the determination unit 5 determines that the object to be inspected 6 is a quality product and outputs the result of the determination to the control unit 9. The control unit 9 moves out the object to be inspected 6 into a quality-product lane by controlling the rotation unit 2.

After that, the control unit 9 returns to the step S12 and starts the inspection of a new object to be inspected 6. Note that the product-inspection apparatus 1 may be configured so that, in the case where the type of a new object to be inspected 6 is different from that of the previously inspected object to be inspected 6, when an inspector, for example, inputs an instruction for inspecting the new object to be inspected 6 through the display unit 10, the process returns to the step S11 and the product-inspection operation for the new object to be inspected 6 is started.

As described above, in the product-inspection apparatus 1 and the product-inspection method according to this example embodiment, a foreign substance 6e is detected by rotating the object to be inspected 6 up and down and thereby making the foreign substance 6e behave differently from the movement of the bubble 6b. Therefore, in the product-inspection apparatus 1 and the product-inspection method according to this example embodiment, there is no need to change the arrangement of the light sources 3 and the imaging unit 4 according to the specific gravity of a foreign substance 6e relative to that of the fluid 6c. Therefore, they can contribute to the simplification of the product-inspection of an object to be inspected 6.

In addition, in general, it is difficult to distinguish between a bubble 6b and a foreign substance 6e. However, it is possible to satisfactorily distinguish between a bubble 6b and a foreign substance 6e by rotating the object to be inspected 6 up and down and thereby making the foreign substance 6e behave differently from the movement of the bubble 6b. It should be noted that even when large and small bubbles 6b move in the fluid 6c, these bubbles 6b move in the same direction, so that it is possible to satisfactorily distinguish between the bubbles 6b and a foreign substance 6e.

Further, in the product-inspection apparatus 1 and the product-inspection method according to this example embodiment, it is determined whether or not a foreign substance 6e is detected based on image information acquired by applying light to an object to be inspected 6 from different directions. Therefore, even for a foreign substance 6e on which light coming from one direction is not reflected (e.g., even for a piece of glass), it is possible to make the foreign substance 6e reflect light by applying the light from another direction, so that it is possible to improve the accuracy of the detection of the foreign substance 6e. As a result, it is possible to improve the accuracy of the product-inspection of an object to be inspected 6.

Further, in the case where the object to be inspected 6 has an elongated shape, it is possible to acquire a larger number of pieces of image information while the object to be inspected 6 is being rotated upside down (i.e., being turned upside down) than the case where the object to be inspected 6 has a shorter shape than the object to be inspected 6 having the elongated shape. Therefore, it is possible to improve the accuracy of the product-inspection of an object to be inspected 6.

Further, when the specific gravity of the foreign substance 6e is smaller than that of the fluid 6c, the foreign substance 6e is moved as if it is sucked to the part of the fluid 6c that is narrowed by the bubble 6b. Therefore, the detection of the foreign substance 6e is preferably performed in this narrowed part. In this way, it is possible to improve the accuracy of the detection of a foreign substance 6e, and thereby to improve the accuracy of the product-inspection of an object to be inspected 6.

Further, since the light sources 3 are provided in the rotation unit 2, the light sources 3 can also be rotated so as to follow the rotation of the object to be inspected 6. Therefore, it is possible to prevent or reduce the change in the conditions for applying light caused by the rotation of the object to be inspected 6, and thereby to improve the accuracy of the product-inspection of an object to be inspected 6.

### <Second Example Embodiment>

In the first example embodiment, an inspector selects the type of an object to be inspected 6 through the display unit 10 and thereby sets the rotation speed of the object to be inspected 6. However, the present invention is not limited to this example. For example, in the above-described steps S14 and S15, the control unit 9 may control the robot arm 22 so that: pieces of image information acquired for each of the light sources 3 are arranged (i.e., sorted) in a chronological order, and moving-image information is thereby generated; a bubble 6b is tracked based on the moving-image information; and by doing so, the moving speed of the bubble 6b is adjusted to a predetermined moving speed.

In this case, the operation for selecting the type of an object to be inspected 6 which would otherwise need to be performed every time an inspector inspects a new object to be inspected 6 can be omitted, so that it is possible to satisfactorily product-inspect the object to be inspected 6 even when there are objects to be inspected 6 having different types on the conveyance table 7 in a mixed manner.

Note that in the case where a plurality of objects to be inspected 6 having the same type are consecutively inspected, firstly, moving-image information of one object to be inspected 6 is acquired as a sample by rotating that object to be inspected 6. Then, the control unit 9 sets the rotation speed of an object to be inspected 6 based on the acquired moving-image information so that the moving speed of the bubble 6b is adjusted to a predetermined moving speed. After that, the steps S12 to S18 may be successively repeated for a plurality of objects to be inspected 6. To put it briefly, the robot arm 22 may be controlled in any kind of manner as long as bubbles 6b move roughly at a constant speed when a plurality of objects to be inspected 6 are inspected.

### <Third Example Embodiment>

The determination unit 5 may omit the tracking of a group of pixels that is recognized as a bubble 6b in the moving-image information. For example, it is possible to find the rough size of a bubble 6b at the time when the object to be inspected 6 is rotated based on the volume of the gas 6b hermetically contained in the object to be inspected 6. Therefore, when the number of pixels included in a group of labelled pixels is equal to or larger than a predetermined number at an initial stage, i.e., at the time when the image information is acquired, the group of pixels is recognized as the bubble 6b and excluded from those to be tracked. In this way, the load for the image processing can be reduced.

Note that since the moving direction of the bubble 6b is known in advance, a group of pixels that is moving in this moving direction at a predetermined moving speed for bubbles 6b may be recognized as a small bubble 6b, and the other group of pixels may be recognized as a foreign substance 6e. Further, when there is no small bubble 6b, a group of pixels that is not moving in the pre-known moving direction for bubbles 6b at the predetermined moving speed for bubbles 6b may be recognized as a foreign substance 6e.

### <Fourth Example Embodiment>

The determination unit 5 may determine the type of a foreign substance 6e based on the moving speed of the foreign substance 6e in the moving-image information. That is, since the object to be inspected 6 is rotated so that bubbles 6b have speeds substantially equal to each other in the fluid 6c irrespective of the type of the object to be inspected 6, there is a high possibility that a foreign substance 6e having a given type moves at a moving speed that falls within the range of moving speeds for that type of the foreign substance 6e. Therefore, the determination unit 5 preferably determines which of predetermined moving-speed ranges specified for respective types of foreign substances 6e the moving speed of a foreign substance 6e recognized based on the moving-image information falls within, and determines the type of the foreign substance 6e based on the result of the determination. In this way, it is possible to determine what kind of a foreign substance 6e is contained in an object to be inspected 6.

### <Other Example Embodiment>

Note that although the present invention is described as a hardware configuration in the above-described first to fourth example embodiments, the present invention is not limited to the hardware configurations. In the present invention, the processes in each of the components can also be implemented by having a CPU (Central Processing Unit) execute a computer program.

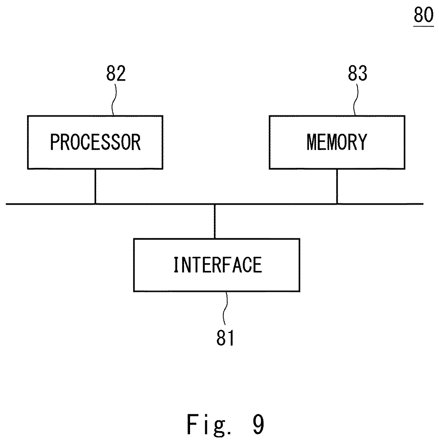

For example, the processing apparatus 8 according to any of the above-described example embodiments can have the below-shown hardware configuration. Fig. 9 shows an example of a hardware configuration included in the processing apparatus 8.

An apparatus 80 shown in Fig. 9 includes a processor 82 and a memory 83 as well as an interface 81. The processing apparatus 8 described in the above example embodiments is implemented as the processor 82 loads and executes a program stored in the memory 83. That is, this program is a program for causing the processor 82 to function as the processing apparatus 8 shown in Fig. 3.

The above-described program may be stored by using various types of non-transitory computer readable media and supplied to a computer (computers including information notification apparatuses). Non-transitory computer readable media include various types of tangible storage media. Examples of the non-transitory computer readable media include magnetic recording media (e.g., a flexible disk, a magnetic tape, and a hard disk drive), and magneto-optical recording media (e.g., a magneto-optical disk). Further, the example includes a CD-ROM (Read Only Memory), a CD-R, and a CD-R/W. Further, the example includes a semiconductor memory (e.g., a mask ROM, a PROM, an EPROM, a flash ROM, and a RAM). Further, the program may be supplied to a computer by various types of transitory computer readable media). Examples of the transitory computer readable media include an electrical signal, an optical signal, and electromagnetic waves. Transitory computer readable media can provide the program to a computer via a wired communication line (e.g., electric wires, and optical fibers) or a wireless communication line.

Note that the present disclosure is not limited to the above-described example embodiments, and they may be modified as desired without departing from the scope of the claims.

Although light is applied to an object to be inspected 6 by using a plurality of light sources 3 in each of the above-described example embodiments, sets of imaging components in each of which a light source 3 and an imaging unit 4 are arranged on both sides of an object to be inspected 6 may be arranged so as to surround the object to be inspected 6. In this case, image information may be acquired by successively controlling the sets of imaging components and thereby photographing the object to be inspected 6 from different directions.

Although a foreign substance 6e is detected based on the image information which is acquired after the rotation of the object to be inspected 6 is finished in each of the above-described example embodiments, a foreign substance 6e may be detected while image information is being acquired.

Although an object to be inspected 6 is rotated around the rotational axis extending in the front/rear direction and passing through roughly the center of the object to be inspected 6 in the longitudinal direction in each of the above-described example embodiments, the disposition of the rotation axis is not limited to any particular disposition as long as the object to be inspected 6 can be rotated in the vertical direction.

For example, the rotation axis may be inclined (this configuration does not form part of the claimed invention). That is, the configuration is not limited to the configuration in which the object to be inspected 6 is rotated up and down and the longitudinal direction of the object to be inspected 6 coincides with the vertical direction. In other words, any configuration may be used as so as the part of the object to be inspected 6 disposed below the rotational axis thereof is positioned on the upper side, and the part of the object to be inspected 6 disposed above the rotational axis thereof is positioned on the lower side. To put it briefly, any configuration may be used as long as the object to be inspected 6 is rotated so that the bubble 6b moves in the fluid 6c.

### Reference Signs List

- 1: PRODUCT-INSPECTION APPARATUS
- 2: ROTATION UNIT
- 3: LIGHT SOURCE
- 4: IMAGING UNIT
- 5: DETERMINATION UNIT
- 6: OBJECT TO BE INSPECTED
- 6a: CONTAINER
- 6b: GAS
- 6c: FLUID
- 6d: PLUG
- 6e: FOREIGN SUBSTANCE
- 7: CONVEYANCE TABLE
- 8: PROCESSING APPARATUS
- 9: CONTROL UNIT
- 10: DISPLAY UNIT
- 21: GRASPING PART
- 21a: BASE PART
- 21b: FIRST GRASPING PIECE
- 21c: SECOND GRASPING PIECE
- 22: ROBOT ARM
- 80: APPARATUS
- 81: INTERFACES
- 82: PROCESSOR
- 83: MEMORY

## Claims

1. A product-inspection apparatus (1) comprising:
a rotation unit (2) configured to rotate an object to be inspected (6) in a vertical plane, the object to be inspected (6) being an object in which a gas (6b) and a fluid (6c) are hermetically contained in a container;
light sources (3) configured to successively apply light to the object to be inspected (6) from different directions, the light being adapted to pass through the object to be inspected (6);
an imaging unit (4) configured to take images of the object to be inspected (6) according to light-application timings at which the light sources (3) successively applies the light to the object to be inspected (6); and
a determination unit (5) configured to determine whether or not the object to be inspected (6) is a quality product based on image information taken by the imaging unit (4) , wherein
the product-inspection apparatus (1) is configured in such a way that while the rotation unit (2) rotates the object to be inspected (6) in the vertical plane, the imaging unit (4) takes images of the object to be inspected (6) according to the light-application timings at which the light sources (3) successively applies the light to the object to be inspected (6),
the determination unit (5) is configured, when detecting, based on the image information, a substance (6e) behaving differently from a movement of a bubble (6b) in the fluid (6c) during the rotation of the object to be inspected (6), to determine that the object to be inspected (6) is a defective product, and
the rotation unit (2) is configured to start its rotation operation in a state in which a longitudinal direction of the object to be inspected (6) coincides with a vertical direction, and finish the rotation operation when the object to be inspected (6) is positioned upside down.

2. The product-inspection apparatus (1) according to Claim 1, wherein the light sources (3) emit light in a wavelength range of near-infrared rays.

3. The product-inspection apparatus (1) according to Claim 1 or 2, wherein the product-inspection apparatus (1) is configured in such a way that the imaging unit (4) takes images of the object to be inspected (6) while synchronizing the light-application timing of the light sources (3) with a shooting timing of the imaging unit (4).

4. A product-inspection method comprising:
a step of rotating an object to be inspected (6) in a vertical plane, the object to be inspected (6) being an object in which a gas (6b) and a fluid (6c) are hermetically contained in a container (6a);
a step of successively applying light to the object to be inspected (6) from different directions, the light being adapted to pass through the object to be inspected (6);
a step of successively taking images of the object to be inspected (6) according to light-application timings at which the light is applied to the object to be inspected (6); and
a step of determining whether or not the object to be inspected (6) is a quality product based on the taken image information, wherein
the step of rotating the object to be inspected (6), the step of successively applying light to the object to be inspected (6), and the step of taking images of the object to be inspected (6) are performed in such a manner that while rotating the object to be inspected (6) in the vertical plane, images of the object to be inspected (6) are taken according to the light-application timings at which the light is successively applied to the object to be inspected (6),
in the step of determining whether or not the object to be inspected (6) is a quality product, when a substance (6e) behaving differently from a movement of a bubble (6b) in the fluid (6c) during the rotation of the object to be inspected (6) is detected, it is determined that the object to be inspected (6) is a defective product, and
the step of rotating the object to be inspected (6) comprises starting a rotation operation in a state in which a longitudinal direction of the object to be inspected (6) coincides with a vertical direction, and finishing the rotation operation when the object to be inspected (6) is positioned upside down.

5. The product-inspection method according to Claim 4, wherein intervals at which the images of the object to be inspected (6) are taken are widened when the viscosity of the fluid (6c) is high and intervals at which the images the images of the object to be inspected (6) are taken are narrowed when the viscosity of the fluid (6c) is low.

6. The product-inspection method according to Claim 4 or 5, wherein: pieces of image information acquired for each light-application direction to the object to be inspected (6) are arranged in a chronological order, and moving-image information is thereby generated; pixels having pixel values of which differences from those of pixels adjacent to them are equal to or larger than a predetermined threshold are tracked; and among the tracked pixels, pixels that move in a predetermined direction is recognized as a bubble (6b) , and pixels that behave differently from a movement of the bubble (6b) is recognized as a foreign substance.

7. The product-inspection method according to any one of Claims 4 to 6, wherein the fluid (6c) is a macromolecular medicine.

8. The product-inspection method according to any one of Claims 4 to 7, wherein the fluid (6c) is a liquid, a gel, or a sol.

9. A computer program including instructions that cause a product-inspection apparatus according to claim 1 to execute the method according claim 4.

## Patentansprüche

1. Produktprüfungsvorrichtung (1), umfassend:
eine Rotationseinheit (2), die so konfiguriert ist, dass sie ein zu prüfendes Objekt (6) in einer vertikalen Ebene dreht, wobei das zu prüfende Objekt (6) ein Objekt ist, in dem ein Gas (6b) und ein Fluid (6c) in einem Behälter hermetisch eingeschlossen sind;
Lichtquellen (3), die so konfiguriert sind, dass sie nacheinander Licht aus unterschiedlichen Richtungen auf das zu prüfende Objekt (6) anwenden, wobei das Licht so angepasst ist, dass es durch das zu prüfende Objekt (6) hindurchläuft;
eine bildgebende Einheit (4), die so konfiguriert ist, dass sie Bilder des zu prüfenden Objekts (6) gemäß Lichtanwendungszeiten aufnimmt, bei denen die Lichtquellen (3) das Licht nacheinander auf das zu untersuchende Objekt (6) anwenden; und
eine Bestimmungseinheit (5), die so konfiguriert ist, dass sie basierend auf von der Bildgebungseinheit (4) aufgenommener Bildinformation bestimmt, ob das zu prüfende Objekt (6) ein Qualitätsprodukt ist oder nicht, wobei
die Produktprüfungsvorrichtung (1) auf derartige Weise konfiguriert ist, dass die bildgebende Einheit (4), während die Rotationseinheit (2) das zu prüfende Objekt (6) in der vertikalen Ebene dreht, Bilder des zu prüfenden Objekts (6) gemäß den Lichtanwendungszeiten aufnimmt, zu denen die Lichtquellen (3) das Licht nacheinander auf das zu prüfende Objekt (6) anwenden,
die Bestimmungseinheit (5) so konfiguriert ist, dass sie bei einem Detektieren, basierend auf der Bildinformation, einer Substanz (6e), die sich während der Drehung des zu prüfenden Objekts (6) anders verhält als eine Bewegung einer Blase (6b) im Fluid (6c), bestimmt, dass das zu prüfende Objekt (6) ein fehlerhaftes Produkt ist, und
die Rotationseinheit (2) so konfiguriert ist, dass sie ihren Rotationsbetrieb in einem Zustand startet, in dem eine Längsrichtung des zu prüfenden Objekts (6) mit einer vertikalen Richtung übereinstimmt, und sie den Rotationsbetrieb beendet, wenn das zu prüfende Objekt (6) umgekehrt ist.

2. Produktprüfungsvorrichtung (1) nach Anspruch 1, wobei die Lichtquellen (3) Licht in einem Wellenlängenbereich von Nahinfrarotstrahlen emittieren.

3. Produktprüfungsvorrichtung (1) nach Anspruch 1 oder 2, wobei die Produktprüfungsvorrichtung (1) auf derartige Weise konfiguriert ist, dass die bildgebende Einheit (4) Bilder des zu prüfenden Objekts (6) aufnimmt, während sie die Lichtanwendungszeit der Lichtquellen (3) mit einer Aufnahmezeit der bildgebenden Einheit (4) synchronisiert.

4. Produktprüfungsverfahren, umfassend:
einen Schritt eines Drehens eines zu prüfenden Objekts (6) in einer vertikalen Ebene, wobei das zu prüfende Objekt (6) ein Objekt ist, in dem ein Gas (6b) und ein Fluid (6c) in einem Behälter (6a) hermetisch eingeschlossen sind;
einen Schritt eines sukzessiven Anwendens von Licht auf das zu prüfende Objekt (6) aus unterschiedlichen Richtungen, wobei das Licht so angepasst ist, dass es durch das zu untersuchende Objekt (6) hindurchläuft;
einen Schritt eines sukzessiven Aufnehmens von Bildern des zu prüfenden Objekts (6) gemäß den Lichtanwendungszeiten, zu denen das Licht auf das zu prüfende Objekt (6) angewendet wird; und
einen Schritt eines Bestimmens, ob das zu prüfende Objekt (6) ein Qualitätsprodukt ist oder nicht, basierend auf der genommenen Bildinformation, wobei
der Schritt eines Drehens des zu prüfenden Objekts (6), der Schritt eines sukzessiven Anwendens von Licht auf das zu prüfende Objekt (6) und der Schritt eines Aufnehmens von Bildern des zu prüfenden Objekts (6) auf derartige Weise durchgeführt werden, dass während eines Drehens des zu prüfenden Objekts (6) in der vertikalen Ebene Bilder des zu prüfenden Objekts (6) gemäß den Lichtanwendungszeiten aufgenommen werden, bei denen das Licht nacheinander auf das zu prüfende Objekt (6) angewendet wird,
dann, wenn beim Schritt eines Bestimmens, ob das zu prüfende Objekt (6) ein Qualitätsprodukt ist oder nicht, eine Substanz (6e) erfasst wird, die sich während des Drehens des zu prüfenden Objekts (6) anders verhält als die Bewegung einer Blase (6b) im Fluid (6c), bestimmt wird, dass das zu prüfende Objekt (6) ein fehlerhaftes Produkt ist; und
der Schritt eines Drehens des zu prüfenden Objekts (6) ein Starten eines Rotationsbetriebs in einem Zustand, in dem eine Längsrichtung des zu prüfenden Objekts (6) mit einer vertikalen Richtung übereinstimmt, und ein Beenden des Rotationsbetriebs, wenn das zu prüfende Objekt (6) umgekehrt ist, umfasst.

5. Produktprüfungsverfahren nach Anspruch 4, wobei Intervalle, in denen die Bilder des zu prüfenden Objekts (6) aufgenommen werden, erweitert werden, wenn die Viskosität des Fluids (6c) hoch ist, und die Intervalle, in denen die Bilder des zu prüfenden Objekts (6) aufgenommen werden, verengt werden, wenn die Viskosität des Fluids (6c) niedrig ist.

6. Produktprüfungsverfahren nach Anspruch 4 oder 5, wobei: Teile von für jede Lichtanwendungsrichtung zu dem zu prüfenden Objekt (6) erlangter Bildinformation in chronologischer Reihenfolge angeordnet werden und dadurch Bewegtbildinformation erzeugt wird; Pixel mit Pixelwerten, deren Unterschiede gegenüber denjenigen von Pixeln, die an sie angrenzen, gleich einer oder größer als eine vorgegebene Schwelle sind, verfolgt werden; und unter den verfolgten Pixeln Pixel, die sich in einer vorbestimmten Richtung bewegen, als Blase (6b) erkannt werden, und Pixel, die sich anders verhalten als eine Bewegung der Blase (6b), als Fremdsubstanz erkannt werden.

7. Produktprüfungsverfahren nach einem der Ansprüche 4 bis 6, wobei das Fluid (6c) ein makromolekulares Arzneimittel ist.

8. Produktprüfungsverfahren nach einem der Ansprüche 4 bis 7, wobei das Fluid (6c) eine Flüssigkeit, ein Gel oder ein Sol ist.

9. Computerprogramm, das Anweisungen enthält, die veranlassen, dass eine Produktprüfungsvorrichtung nach Anspruch 1 das Verfahren nach Anspruch 4 auszuführt.

## Revendications

1. Appareil d'inspection de produit (1) comportant :
une unité de rotation (2) configurée pour faire tourner un objet à inspecter (6) dans un plan vertical, l'objet à inspecter (6) étant un objet dans lequel un gaz (6b) et un fluide (6c) sont hermétiquement contenus dans un récipient ;
des sources lumineuses (3) configurées pour appliquer successivement de la lumière sur l'objet à inspecter (6) à partir de directions différentes, la lumière étant adaptée pour traverser l'objet à inspecter (6) ;
une unité d'imagerie (4) configurée pour prendre des images de l'objet à inspecter (6) selon des temporisations d'application de lumière auxquelles les sources lumineuses (3) appliquent successivement la lumière à l'objet à inspecter (6) ; et
une unité de détermination (5) configurée pour déterminer si l'objet à inspecter (6) est ou non un produit de qualité sur la base d'informations d'images prises par l'unité d'imagerie (4), dans lequel
l'appareil d'inspection de produit (1) est configuré de sorte que, pendant que l'unité de rotation (2) fait tourner l'objet à inspecter (6) dans le plan vertical, l'unité d'imagerie (4) prend des images de l'objet à inspecter (6) en fonction des temporisations d'application de lumière auxquelles les sources lumineuses (3) appliquent successivement la lumière à l'objet à inspecter (6),
l'unité de détermination (5) est configurée, lors de la détection, sur la base des informations d'images, d'une substance (6e) se comportant différemment d'un mouvement d'une bulle (6b) dans le fluide (6c) pendant la rotation de l'objet à inspecter (6), pour déterminer que l'objet à inspecter (6) est un produit défectueux, et
l'unité de rotation (2) est configurée pour démarrer son opération de rotation dans un état dans lequel une direction longitudinale de l'objet à inspecter (6) coïncide avec une direction verticale, et terminer l'opération de rotation lorsque l'objet à inspecter (6) est positionné à l'envers.

2. Appareil d'inspection de produit (1) selon la revendication 1, dans lequel les sources lumineuses (3) émettent de la lumière dans une plage de longueurs d'onde de rayons proches infrarouges.

3. Appareil d'inspection de produit (1) selon la revendication 1 ou 2, dans lequel l'appareil d'inspection de produit (1) est configuré de sorte que l'unité d'imagerie (4) prenne des images de l'objet à inspecter (6) tout en synchronisant la temporisation d'application de lumière des sources lumineuses (3) avec une temporisation de prise de vue de l'unité d'imagerie (4).

4. Procédé d'inspection de produit comportant :
une étape de rotation d'un objet à inspecter (6) dans un plan vertical, l'objet à inspecter (6) étant un objet dans lequel un gaz (6b) et un fluide (6c) sont hermétiquement contenus dans un récipient (6a) ;
une étape d'application successive de lumière sur l'objet à inspecter (6) à partir de directions différentes, la lumière étant adaptée pour traverser l'objet à inspecter (6) ;
une étape de prise successive d'images de l'objet à inspecter (6) selon des temporisations d'application de lumière auxquelles la lumière est appliquée à l'objet à inspecter (6) ; et
une étape de détermination si l'objet à inspecter (6) est ou non un produit de qualité sur la base des informations d'images prises, dans lequel
l'étape de rotation de l'objet à inspecter (6), l'étape d'application successive de lumière à l'objet à inspecter (6), et l'étape de prise d'images de l'objet à inspecter (6) sont réalisées de manière à ce que, lors de la rotation de l'objet à inspecter (6) dans le plan vertical, des images de l'objet à inspecter (6) soient prises en fonction des temporisations d'application de lumière auxquelles la lumière est appliquée successivement à l'objet à inspecter (6),
dans l'étape de détermination si l'objet à inspecter (6) est ou non un produit de qualité, lorsqu'une substance (6e) se comportant différemment d'un mouvement d'une bulle (6b) dans le fluide (6c) pendant la rotation de l'objet à inspecter (6) est détectée, il est déterminé que l'objet à inspecter (6) est un produit défectueux, et
l'étape de rotation de l'objet à inspecter (6) comporte le démarrage d'une opération de rotation dans un état dans lequel une direction longitudinale de l'objet à inspecter (6) coïncide avec une direction verticale, et la fin de l'opération de rotation lorsque l'objet à inspecter (6) est positionné à l'envers.

5. Procédé d'inspection de produit selon la revendication 4, dans lequel les intervalles auxquels les images de l'objet à inspecter (6) sont prises sont élargis lorsque la viscosité du fluide (6c) est élevée et les intervalles auxquels les images de l'objet à inspecter (6) sont prises sont réduits lorsque la viscosité du fluide (6c) est faible.

6. Procédé d'inspection de produit selon la revendication 4 ou 5, dans lequel : des informations d'images acquises pour chaque direction d'application de lumière à l'objet à inspecter (6) sont agencées dans un ordre chronologique, et des informations d'images en mouvement sont ainsi générées ; des pixels présentant des valeurs de pixels dont les différences par rapport à celles de pixels adjacents sont supérieures ou égales à un seuil prédéterminé sont suivis ; et parmi les pixels suivis, des pixels qui se déplacent dans une direction prédéterminée sont reconnus comme une bulle (6b), et des pixels qui se comportent différemment d'un mouvement de la bulle (6b) sont reconnus comme une substance étrangère.

7. Procédé d'inspection de produit selon l'une quelconque des revendications 4 à 6, dans lequel le fluide (6c) est un médicament macromoléculaire.

8. Procédé d'inspection de produit selon l'une quelconque des revendications 4 à 7, dans lequel le fluide (6c) est un liquide, un gel ou un sol.

9. Programme informatique incluant des instructions qui amènent un appareil d'inspection de produit selon la revendication 1 à exécuter le procédé selon la revendication 4.
